# FASCICULE DE BREVET EUROPEEN

(11) **EP 3 828 434 B1**
(45) Date de publication et mention de la délivrance du brevet: **14.08.2024**
(21) Numéro de dépôt: 20209358.9
(22) Date de dépôt: 24.11.2020
(51) Int. Cl.: F16F 1/12

(54) **JAMBE DE FORCE DE VÉHICULE AUTOMOBILE**
FEDERBEINANORDNUNG EINES KRAFTFAHRZEUGES
SUSPENSION STRUT FOR A MOTOR VEHICLE

(30) Priorité: 26.11.2019 FR 1913194
(43) Date de publication de la demande: 02.06.2021
(73) Titulaire: Renault s.a.s, 92100 Boulogne Billancourt (FR)
(72) Inventeur: CUBAUD, OLIVIER, 78360 MONTESSON (FR); ROGER, AYMERIC, 92100 BOULOGNE BILLANCOURT (FR)
(74) Mandataire: Renault Group

(56) Documents cités:
- WO-A1-2019/238959
- CN-U- 208 702 986
- JP-A- 2016 194 317
- LU-A1- 47 738

## Description

### Domaine technique de l'invention

L'invention concerne un agencement d'appui d'une extrémité axiale d'un ressort pour une jambe de force de véhicule automobile.

L'invention concerne aussi un procédé d'assemblage du ressort hélicoïdal sur la coupelle de la jambe de force avec interposition d'un élément de maintien de l'extrémité associée du ressort.

### Arrière-plan technique

Un véhicule automobile comprend classiquement un système de suspension permettant la liaison entre un ensemble de masses non suspendues et un ensemble de masses suspendues.

La suspension comprend entre autre une jambe de force - aussi appelée jambe de suspension et/ou d'amortissement - qui comporte un amortisseur et un ressort hélicoïdal coaxial.

La jambe de force permet de maintenir le bas de caisse de l'ensemble de masses suspendues à une distance déterminée au-dessus du sol, appelée hauteur de caisse "H" ou encore "garde au sol".

L'amortisseur comporte un corps cylindrique et une tige montée télescopique dans le corps de l'amortisseur.

Le ressort hélicoïdal est agencé coaxialement au corps de l'amortisseur. Il est généralement monté précontraint en compression entre une coupelle supérieure fixée à l'extrémité supérieure de la tige, et une coupelle inférieure fixée au corps de l'amortisseur.

La coupelle inférieure comprend un élément annulaire pour le maintien du ressort sur la face supérieure de la coupelle inférieure.

L'invention concerne plus particulièrement une jambe de force de véhicule automobile comportant notamment un ressort hélicoïdal, une coupelle d'appui axial d'une spire d'extrémité axiale du ressort qui comporte un logement annuaire en forme de gouttière qui est ouvert axialement en direction de la spire d'extrémité axiale du ressort, et un anneau d'appui de la spire d'extrémité axiale du ressort qui est logé dans le logement annulaire de la coupelle, au moins sur un secteur angulaire du logement annulaire. L'allégement souhaitable des pièces de suspension conduit à une solution qui combine une coupelle inférieure de ressort en matière plastique et à un anneau intermédiaire d'appui de la spire d'extrémité axiale du ressort qui est rendu solidaire de l'extrémité inférieure associée du ressort hélicoïdal. Selon une conception connue, l'ensemble anneau d'appui-ressort vient se loger dans un logement en forme de gouttière de la coupelle.

Une telle conception présente notamment deux risques de mauvais fonctionnement.

Il peut se produire un vrillage de l'anneau d'appui du ressort entrainé par le ressort. Ce phénomène a déjà été reproduit lors d'essais d'endurance.

La liberté de mouvement de la spire inférieure du ressort et de l'anneau d'appui du ressort présente aussi un risque en cas de rupture du ressort.

Le document JP2016194317 est ainsi considéré comme constituant l'art antérieur le plus proche.

### Résumé de l'invention

Afin d'éviter le vrillage de l'anneau d'appui du ressort dans la coupelle lors du fonctionnement de la jambe de force, et d'assurer un maintien de l'anneau d'appui et de la dernière spire du ressort en cas de rupture du ressort, l'invention propose une jambe de force du type mentionné précédemment, caractérisée :
- en ce que l'anneau d'appui est solidaire de la spire d'extrémité axiale du ressort pour former un sous-ensemble ressort-anneau d'appui ;
- et en ce que le sous-ensemble ressort-anneau d'appui est emboîté élastiquement dans le logement annulaire.
- et en ce qu'
au moins une face latérale interne du logement annulaire comporte au moins une nervure qui coopère avec une portion complémentaire associée de l'anneau d'appui ;

Selon d'autres caractéristiques de l'invention:
- chacune de deux faces latérales internes opposées du logement annulaire comporte une nervure qui coopère avec une portion complémentaire de l'anneau d'appui ;
- au moins une nervure est une nervure continue qui s'étend angulairement tout le long de la face interne du logement annulaire ;
- au moins une nervure est constituée d'une série de tronçons de nervure qui sont répartis angulairement le long de la face latérale interne du logement annulaire ;
- chaque portion complémentaire de l'anneau d'appui est une portion de rainure complémentaire de la nervure associée ;
- la coupelle est réalisée en matière plastique ;
- l'anneau d'appui est rendu solidaire de la spire d'extrémité axiale du ressort par surmoulage, et/ou par collage et/ou par emboîtement élastique ;
- l'anneau d'appui est réalisé en matériau élastomère naturel ou synthétique, ou en matière plastique.

L'invention propose aussi un procédé d'assemblage des composants d'une jambe de force selon l'invention, caractérisé en ce qu'il consiste à :
- rendre l'anneau d'appui solidaire de la spire d'extrémité axiale du ressort hélicoïdal pour réaliser un sous-ensemble ressort-anneau d'appui ;
- emboîter élastiquement le sous-ensemble ressort-anneau dans le logement annulaire de la coupelle.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en section par un plan axial d'un ensemble d'appui à coupelle et anneau d'appui selon l'état de la technique ;
[Fig.2] - la figure 2 est une représentation schématique des composants d'un ensemble d'appui selon l'invention qui illustre leur procédé d'assemblage ;
[Fig.3] - la figure 3 est une vue en perspective de dessus des composants de l'ensemble d'appui selon l'invention ;
[Fig.4] - la figure 4 est une vue de dessus de l'ensemble illustré à la figure 3 ;
[Fig.5] - et la figure 5 est une vue analogue à celle de la figure 4 qui illustre une variante de réalisation des moyens de retenue par emboîtement élastique de l'anneau d'appui dans le logement de la coupelle.

### Description détaillée de l'invention

Dans la suite de la description, des éléments présentant une structure identique ou des fonctions analogues seront désignés par des mêmes références.

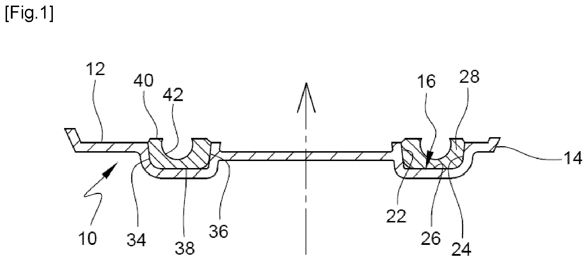

On adoptera une orientation axiale dirigée de bas en haut selon l'axe de la jambe de force commun à l'amortisseur et au ressort hélicoïdal, comme indiqué par l'axe "A" de la figure 1, les termes « inférieur » et « supérieur » étant définis par rapport à cette orientation axiale. On adoptera aussi des orientations radiales dirigées orthogonalement à l"axe A, depuis l'intérieur vers l'extérieur selon la proximité avec l'axe A de l'amortisseur.

Pour la description complète d'un exemple d'une jambe de force, on peut par exemple se reporter au document FR-A1-3.075.104. On a représenté à la figure 1 une coupelle 10 en forme générale de disque qui est délimitée par une face supérieure 12 et un bord latéral périphérique 14.

La coupelle 10 comporte un logement 16 en forme de gouttière annulaire qui s'étend ici sur environ trois quarts de tour et qui est délimitée angulairement par deux bords d'extrémité 18 et 20.

Le logement annulaire 16 est de section sensiblement en U ouvert verticalement vers le haut et il est délimité par deux faces latérales verticales internes et opposées radialement extérieure 22 et radialement intérieure 24, ainsi que par une face inférieure de fond 26.

Sur toute sa longueur angulaire, le logement 16 est apte à recevoir un anneau d'appui 28 de forme complémentaire qui s'étend par exemple angulairement sur toute la longueur angulaire du logement 26.

L'anneau d'appui 28 s'étend ainsi par exemple sur trois quarts de tour et il est délimité angulairement par deux bords d'extrémité 30 et 32.

L'anneau d'appui 28 est délimité latéralement par deux faces latérales verticales opposées radialement extérieure 34 et radialement intérieure 36, ainsi que par une face inférieure de fond 38 et par une face supérieure 40 parallèle au plan général, ici horizontal, dans lequel s'étend la coupelle 10.

Dans sa face supérieure 40, l'anneau d'appui 28 comporte une gorge axiale 42 qui est ouverte verticalement vers le haut et qui est ici de section semi-circulaire.

La gorge axiale 42 de l'anneau d'appui 28 est dimensionnée pour recevoir, de préférence sur toute sa longueur angulaire, un tronçon d'extrémité libre de la dernière spire d'extrémité axiale inférieure d'un ressort hélicoïdal de compression non représenté à la figure 1.

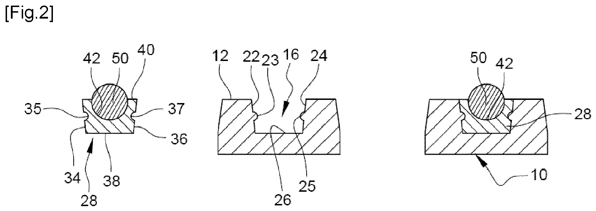

Comme on peut le voir à la figure 2, et conformément à l'invention, chacune des faces latérales 34 et 36 de l'anneau d'appui 28 comporte, ici sensiblement à mi-hauteur, une rainure de section semi-circulaire, 35 et 37 respectivement dont chacune est ouverte radialement vers l'extérieur et vers l'intérieur respectivement.

Chaque rainure 35, 37 est ici une rainure continue qui s'étend sur toute la longueur angulaire de l'anneau d'appui 28.

De plus, comme on peut le voir à la partie gauche de la figure 2, l'anneau d'appui 28 et le tronçon d'extrémité libre 50 de la spire d'extrémité inférieure du ressort hélicoïdal de la jambe de force est reçu dans la gorge 42 et il est rendu solidaire de l'anneau d'appui 28 - par exemple par collage - pour former un sous-ensemble anneau d'appui 28-ressort 50 qui est ensuite assemblé avec la coupelle 10.

Pour assurer la fixation de ce sous-ensemble 28-50 sur la coupelle 10, par emboîtement élastique de l'anneau d'appui 28 dans le logement 16, chacune des deux faces latérales 22 et 24 du logement 16 de la coupelle 10 comporte, sensiblement à mi-hauteur, une nervure de section semi-circulaire 23, 25 respectivement qui s'étend radialement en saillie et dont les dimensions sont complémentaires des rainures 35, 37 respectivement de l'anneau d'appui 28.

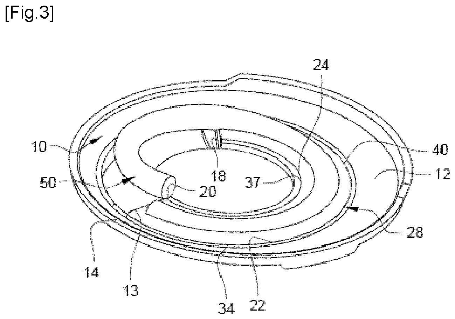

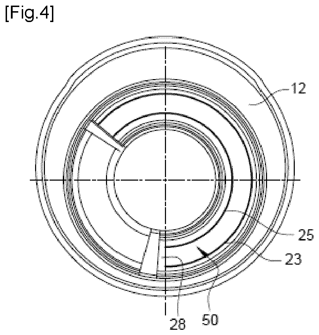

Cette conception permet, comme on peut le voir notamment à la partie droite de la figure 2, d'emboiter l'anneau d'appui 28 - solidaire le la spire d'extrémité axiale 50 - dans le logement 16. Cet emboîtement élastique - aussi appelé « clippage » ou « clipsage » - s'effectue en introduisant l'anneau d'appui 28 dans le logement 16, selon l'orientation angulaire respective illustrée aux figures 3 et 4, puis en exerçant un effort axial d'emboîtement dont l'application facilitée par la grande rigidité de la spire d'extrémité axiale du ressort.

A l'issue de l'assemblage, chaque nervure 23, 25 est reçue dans sa nervure associée 35, 37 de l'anneau d'appui 28.

Comme on peut le voir notamment à la figure 3, pour le positionnement angulaire relatif de l'anneau d'appui 28 par rapport au logement complémentaire 16, la coupelle 10 peut comporter une surface radiale de butée 13 contre laquelle la face d'extrémité 18 de l'anneau d'appui 28 est positionnée en appui angulaire.

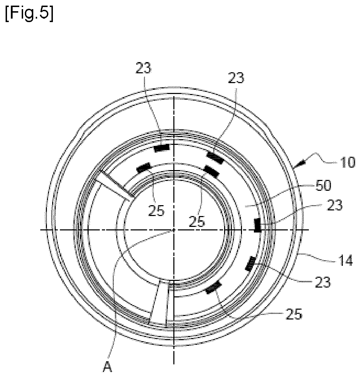

Selon la variante illustrée schématiquement à la figure 5, les nervures 23 et 25 ne sont pas continues tout le long des faces latérales 22 et 24, mais sont constituées par une succession de tronçons discrets de nervure qui sont répartis angulairement par exemple en fonction des efforts exercés par le ressort et/ou pour optimiser une réduction de la masse de la coupelle 10 qui est par exemple réalisée par moulage en matière plastique.

Sans sortir du cadre de l'invention, par une inversion mécanique simple, il est possible de réaliser les rainures dans les faces latérales internes du logement 28, et les nervures complémentaires sur les faces latérales externes de l'anneau d'appui 28.

## Revendications

1. Jambe de force de véhicule automobile comportant :
- un ressort hélicoïdal ;
- une coupelle (10) d'appui d'une spire (50) d'extrémité axiale du ressort qui comporte un logement annulaire (16) en forme de gouttière qui est ouvert axialement en direction de la spire (50) d'extrémité axiale du ressort ;
- un anneau (28) d'appui de la spire (50) d'extrémité axiale du ressort qui est logé dans le logement annulaire (16) de la coupelle (10), au moins sur un secteur angulaire du logement annulaire, et qui est solidaire de la spire (50) d'extrémité axiale du ressort pour former un sous-ensemble ressort (50) - anneau d'appui (28) **caractérisée :**
- **en ce qu'**au moins une face latérale interne (22, 24) du logement annulaire (16) comporte au moins une nervure (23, 25) qui coopère avec une portion complémentaire associée (35, 37) de l'anneau d'appui (28);
- et **en ce que** le sous-ensemble ressort (50)-anneau d'appui (28) est emboîté élastiquement dans le logement annulaire (16) de la coupelle (10)..

2. Jambe de force selon la revendication 1, **caractérisée en ce que** chacune de deux faces latérales internes opposées (22, 24) du logement annulaire (16) comporte une nervure (23, 25) qui coopère avec une portion complémentaire (35, 37) de l'anneau d'appui (28).

3. Jambe de force selon l'une quelconque des revendications 1 ou 2, **caractérisée en ce qu'**au moins une nervure (23, 25) est une nervure continue qui s'étend angulairement tout le long de la face latérale interne (22, 24) du logement annulaire (16).

4. Jambe de force selon l'une quelconque des revendications 1 ou 2, **caractérisée en ce qu'**au moins une nervure (23, 25) est constituée d'une série de tronçons de nervure qui sont répartis angulairement le long de la face latérale interne (22, 24) du logement annulaire (16).

5. Jambe de force selon l'une quelconque des revendications 1 à 4 **caractérisée en ce que** chaque portion complémentaire de l'anneau d'appui (28) est une portion de rainure (35, 37) complémentaire de la nervure associée (23, 25).

6. Jambe de force selon l'une quelconque des revendications précédentes, **caractérisée en ce que** la coupelle (10) est réalisée en matière plastique.

7. Jambe de force selon l'une quelconque des revendications précédentes, **caractérisée en ce que** l'anneau d'appui (28) est rendu solidaire de la spire (50) d'extrémité axiale du ressort par surmoulage, et/ou par collage et/ou par emboîtement élastique.

8. Jambe de force selon l'une quelconque des revendications précédentes, **caractérisée en ce que** l'anneau d'appui (28) est réalisé en matériau élastomère naturel ou synthétique.

9. Procédé d'assemblage des composants d'une jambe de force selon l'une quelconque des revendications 1 à 8, **caractérisé en ce qu'**il consiste à :
- rendre l'anneau d'appui (28) solidaire de la spire (50) d'extrémité axiale du ressort hélicoïdal pour réaliser un sous-ensemble ressort (50)-anneau d'appui (28) ;
- emboîter élastiquement le sous-ensemble ressort (50)-anneau d'appui (28) dans le logement annulaire (16) de la coupelle (10).

10. Procédé d'assemblage selon la revendication 9, **caractérisé en ce qu'**il consiste à emboîter élastiquement le sous-ensemble ressort (50) anneau d'appui (28) dans le logement annulaire (16) de la coupelle (10), en introduisant l'anneau d'appui (28) dans le logement annulaire (16), puis en exerçant un effort axial.

## Patentansprüche

1. Federbein eines Kraftfahrzeugs, umfassend:
- eine Spiralfeder;
- einen Teller (10) zum Stützen einer axialen Endwindung (50) der Feder, der eine ringförmige Aufnahme (16) in Form einer Rinne umfasst, die axial in Richtung der axialen Endwindung (50) der Feder offen ist;
- einen Ring (28) zum Stützen der axialen Endwindung (50) der Feder, der in der ringförmigen Aufnahme (16) des Tellers (10) mindestens über einen Winkelbereich der ringförmigen Aufnahme aufgenommen ist und der mit der axialen Endwindung (50) der Feder fest verbunden ist, um eine Unterbaugruppe Feder (50) - Stützring (28) zu bilden, **dadurch gekennzeichnet:**
- **dass** mindestens eine innere Seitenfläche (22, 24) der ringförmigen Aufnahme (16) mindestens eine Rippe (23, 25) umfasst, die mit einem assoziierten komplementären Abschnitt (35, 37) des Stützrings (28) zusammenwirkt;
- und **dass** die Unterbaugruppe Feder (50) - Stützring (28) in die ringförmige Aufnahme (16) des Tellers (10) elastisch eingepasst ist.

2. Federbein nach Anspruch 1, **dadurch gekennzeichnet, dass** jede von zwei gegenüberliegenden inneren Seitenflächen (22, 24) der ringförmigen Aufnahme (16) eine Rippe (23, 25) umfasst, die mit einem komplementären Abschnitt (35, 37) des Stützrings (28) zusammenwirkt.

3. Federbein nach einem beliebigen der Ansprüche 1 oder 2, **dadurch gekennzeichnet, dass** mindestens eine Rippe (23, 25) eine durchgehenden Rippe ist, die sich winkelmäßig entlang der gesamten inneren Seitenfläche (22, 24) der ringförmigen Aufnahme (16) erstreckt.

4. Federbein nach einem beliebigen der Ansprüche 1 oder 2, **dadurch gekennzeichnet, dass** mindestens eine Rippe (23, 25) aus einer Reihe von Rippenstücken besteht, die entlang der inneren Seitenfläche (22, 24) der ringförmigen Aufnahme (16) winklig verteilt sind.

5. Federbein nach einem beliebigen der Ansprüche 1 bis 4, **dadurch gekennzeichnet, dass** jeder komplementäre Abschnitt des Stützrings (28) ein komplementärer Rillenabschnitt (35, 37) der assoziierten Rippe (23, 25) ist.

6. Federbein nach einem beliebigen der vorhergehenden Ansprüche, **dadurch gekennzeichnet, dass** der Teller (10) aus einem Kunststoffmaterial hergestellt ist.

7. Federbein nach einem beliebigen der vorhergehenden Ansprüche, **dadurch gekennzeichnet, dass** der Stützring (28) mit der axialen Endwindung (50) der Feder durch Überformen und/oder Kleben und/oder elastisches Einpassen fest verbunden ist.

8. Federbein nach einem beliebigen der vorhergehenden Ansprüche, **dadurch gekennzeichnet, dass** der Stützring (28) aus einem natürlichen oder synthetischen Elastomermaterial hergestellt ist.

9. Verfahren zum Zusammenbau der Komponenten eines Federbeins nach einem beliebigen der Ansprüche 1 bis 8, **dadurch gekennzeichnet, dass** es aus Folgendem besteht:
- festes Verbinden des Stützrings (28) mit der axialen Endwindung (50) der Spiralfeder, um eine Unterbaugruppe Feder (50) - Stützring (28) herzustellen;
- elastisches Einpassen der Unterbaugruppe Feder (50)
- Stützring (28) in die ringförmige Aufnahme (16) des Tellers (10).

10. Zusammenbauverfahren nach Anspruch 9, **dadurch gekennzeichnet, dass** es darin besteht, die Unterbaugruppe Feder (50) Stützring (28) in die ringförmige Aufnahme (16) des Tellers (10) elastisch einzupassen, indem der Stützring (28) in die ringförmige Aufnahme (16) eingeführt und dann eine axiale Kraft ausgeübt wird.

## Claims

1. Motor vehicle strut comprising:
- a helical spring;
- a bearing cup (10) for an axial end turn (50) of the spring, which comprises an annular housing (16) in the form of a gutter which is open axially in the direction of the axial end turn (50) of the spring;
- a bearing ring (28) for the axial end turn (50) of the spring, which is housed in the annular housing (16) of the cup (10), at least over an angular sector of the annular housing, and which is secured to the axial end turn (50) of the spring to form a spring (50)/bearing ring (28) subassembly, **characterized:**
- **in that** at least one inner lateral face (22, 24) of the annular housing (16) comprises at least one rib (23, 25) which cooperates with an associated complementary portion (35, 37) of the bearing ring (28);
- and **in that** the spring (50)/bearing ring (28) subassembly is elastically fitted into the annular housing (16) of the cup (10).

2. Strut according to Claim 1, **characterized in that** each of two opposite inner lateral faces (22, 24) of the annular housing (16) comprises a rib (23, 25) which cooperates with a complementary portion (35, 37) of the bearing ring (28).

3. Strut according to either one of Claims 1 and 2, **characterized in that** at least one rib (23, 25) is a continuous rib which extends angularly all along the inner lateral face (22, 24) of the annular housing (16).

4. Strut according to either one of Claims 1 and 2, **characterized in that** at least one rib (23, 25) is formed by a series of rib sections which are distributed angularly along the inner lateral face (22, 24) of the annular housing (16).

5. Strut according to any one of Claims 1 to 4, **characterized in that** each complementary portion of the bearing ring (28) is a slot portion (35, 37) which is complementary to the associated rib (23, 25).

6. Strut according to any one of the preceding claims, **characterized in that** the cup (10) is made of plastic.

7. Strut according to any one of the preceding claims, **characterized in that** the bearing ring (28) is secured to the axial end turn (50) of the spring by overmoulding, and/or by adhesive bonding and/or by elastic fitting.

8. Strut according to any one of the preceding claims, **characterized in that** the bearing ring (28) is made of natural or synthetic elastomer material.

9. Method for assembling the components of a strut according to any one of Claims 1 to 8, **characterized in that** it consists in:
- securing the bearing ring (28) to the axial end turn (50) of the helical spring to produce a spring (50)/bearing ring (28) subassembly;
- elastically fitting the spring (50)/bearing ring (28) subassembly into the annular housing (16) of the cup (10) .

10. Assembly method according to Claim 9, **characterized in that** it consists in elastically fitting the spring (50)/bearing ring (28) subassembly into the annular housing (16) of the cup (10) by introducing the bearing ring (28) into the annular housing (16) and then by exerting an axial force.
